(19) Europäisches Patentamt
European Patent Office
Office européen des brevets

(11) **EP 2 796 274 B1**

(12) **EUROPEAN PATENT SPECIFICATION**

(45) Date of publication and mention
of the grant of the patent:
**20.04.2016   Bulletin 2016/16**

(21) Application number: **11878259.8**

(22) Date of filing: **22.12.2011**

(51) Int Cl.:
*B29C 70/06* (2006.01)     *B29C 70/10* (2006.01)
*B29C 70/16* (2006.01)     *D04H 3/002* (2012.01)
*D04H 3/04* (2012.01)      *D04H 3/12* (2006.01)
*F16L 9/16* (2006.01)      *B29C 70/20* (2006.01)
*B29C 53/12* (2006.01)     *F16L 11/08* (2006.01)
*B29C 70/52* (2006.01)     *F16L 9/14* (2006.01)
*B29L 23/00* (2006.01)     *B29K 63/00* (2006.01)
*B29K 307/04* (2006.01)

(86) International application number:
**PCT/JP2011/080552**

(87) International publication number:
**WO 2013/094079 (27.06.2013 Gazette 2013/26)**

(54) **FLAT WIRE**

FLACHER DRAHT

FIL PLAT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.10.2014   Bulletin 2014/44**

(73) Proprietor: **Tokyo Rope Manufacturing Co., Ltd.
Tokyo 103-8306 (JP)**

(72) Inventors:
• **USHIJIMA, Kenichi
Tokyo 103-8306 (JP)**

• **ISHIMOTO, Kazuhiro
Tokyo 103-8306 (JP)**

(74) Representative: **Beresford, Keith Denis Lewis et al
Beresford Crump LLP
16 High Holborn
London WC1V 6BX (GB)**

(56) References cited:
EP-A1- 0 381 590      DE-A1- 2 028 785
JP-A- H0 693 579      JP-A- H06 286 014
JP-A- S59 144 837     JP-A- 2006 070 153
US-A- 5 061 338

**Description**

Technical Field

The present invention relates to a flat wire for use as a pipe or cable reinforcement.

Background Art

The outer periphery of a transport pipe for transporting crude oil or gas or the like, or of a submarine (underwater) cable comprising bundled power transmission lines or communication lines or the like, or of other pipes and cables is provided with multiple layers for preventing the leakage or intrusion of water, oil and gas and the like or for reinforcement or cladding, etc. (for example, see International Patent Application Publication No. WO2009/087348).

In order to increase the strength of a pipe or cable, a flat steel wire having a rectangular cross section is wound helically on the outer peripheral surface of the pipe or cable. Flat steel wire, which has a high strength on the order of 1,500 Mpa, is also capable of being preformed into a helical shape and has comparatively favourable properties as a reinforcing material for pipes or cables.

However, there are instances where steel wire is corroded when crude oil that flows through a pipe contains hydrogen sulphide. Further, steel wire has a specific gravity as high as 7.8 and is heavy. In view of the problem of dead load, there is a limitation upon the extent to which a pipe or cable using flat-shaped steel wire as reinforcement can be lengthened.

German Patent Application Publication No. DE 20 28 785 A1 discloses a wire winding comprising a multiplicity of fibres impregnated with a thermosetting resin, wound into a helical form of constant diameter in the longitudinal direction so as to have an inner surface facing inward and an outer surface facing outward.

The flat wires described in DE 20 28 785 A1 are manufactured by: delivering fibres from respective ones of a plurality of delivery reels, upon which the fibres have been wound, while tensioning all of the fibres equally; impregnating with a thermosetting resin the fibres delivered from the delivery reels; shaping and forming the thermosetting-resin-impregnated fibres into a bundle by a die; winding the shaped bundle of thermosetting-resin-impregnated fibres upon a cylindrical grooved roll, a drum portion of which has been formed to have a helical groove, multiple times while applying heat thereto, and thereafter feeding the bundle from the grooved roll; and taking up onto a take-up reel the bundle of fibres, which have been shaped into helical form, fed from the grooved roll. Dies for shaping and forming fibre bundles having semi-circular, T-shaped, or triangular, cross-section are illustrated.

European Patent Application Publication No. EP 0 381 590 A1 discloses a process for continuously manufacturing curved flat strips with a constant cross-section, e.g. rectangular cross-section, comprising high strength filament reinforcing elements in a cross-linkable plastic. The flat strips, of rectangular cross-section, have application to reinforce light weight tubing.

Summary of the Invention

The present invention is intended to provide a flat wire that is light in weight and that will not corrode.

In particular, the present invention is to provide a flat wire the helical shape of which is resistant to change even with the passage of time.

A flat wire according to the present invention comprises a multiplicity of carbon fibres impregnated with a thermosetting resin, the flat wire having a cross section of rectangular shape and being shaped into a helical form of constant diameter in the longitudinal direction so as to have an inner surface facing inward at all times and an outer surface facing outward at all times, the carbon fibres being of gradually increasing length from the inner surface toward the outer surface.

The shape of the cross section may be one wherein the four corners of a rectangle are rounded or possess a somewhat arcuate curvature.

The flat wire has a multiplicity of carbon fibres, which have been impregnated with a thermosetting resin, bundled such that the cross section of the flat wire is rectangular. The carbon fibres are shaped into a helical form of limited length and constant diameter in the longitudinal direction along the entire length thereof. The rectangular shape of the cross section is the same along the entire length of the flat wire. The long sides of the rectangle that appear in the cross section correspond to the width of the flat wire and the short sides correspond to the thickness of the flat wire.

The flat wire of the present invention comprises a multiplicity of carbon fibres of different lengths. That is, in the helical flat wire of predetermined length, the length of the carbon fibres constituting the inner surface of the flat wire is smallest and the length of the carbon fibres constituting the outer surface is greatest. The carbon fibres increase in length gradually from the inner surface toward the outer surface.

Since the carbon fibres increase in length gradually from the inner surface toward the outer surface of the helical flat wire (the closer they are to the outer surface, the greater the length of the carbon fibres, and the closer they are to the inner surface, the smaller the length of the carbon fibres), the flat wire exhibits almost no or little strain (internal stress). The helical shape is maintained as is (the helical shape is resistant to change) even with the passage of time, and loss of shape will not readily occur.

The flat wire the cross section of which is rectangular, and which has been shaped into helical form having a constant diameter in the longitudinal direction, is such that the path length of a helix differs at each position in the thickness direction. In the flat wire of predetermined length, the path length of the helix at the inner surface is the smallest and the path length of the helix at the outer surface is the largest. The helix path length gradually increases from the inner surface toward the outer surface. In one embodiment, a carbon fibre at each position along the thickness direction has a length identical with the path length of the helix at this position. Since the helical flat wire comprises a multiplicity of carbon fibres in a state in which they will not elongate and contract, the flat wire obtained will be free of strain (internal stress) and the helical shape can be maintained over a long period of time.

Consider an x axis along the thickness of the flat wire, where it is assumed that the direction from the inner surface toward the outer surface is positive. If we let the centre along the thickness direction (a point intermediate the inner and outer surfaces) be the origin ($x=0$) of the x axis, let L represent the length of a helical carbon fibre situated at the centre along the thickness direction (the origin of the x axis) and let $1/\kappa$ represent the radius of curvature of the helical carbon fibre situated at the centre along the thickness direction, then the length of a helical carbon fibre at each position along the thickness direction of the flat wire will be represented by $L(1+\kappa x)$. For example, if the thickness of the flat wire is t, then the length of a carbon fibre at the outer surface of the flat wire will be represented by $L(1+\kappa t/2)$, and the length of a carbon fibre at the inner surface will be represented by $(1-\kappa t/2)$. The length of a helical carbon fibre at each position along the thickness direction of the flat wire is defined in accordance with the helical curvature radius $1/\kappa$ and the thickness t of the flat wire.

Typically the flat wire described herein, may be used as reinforcement for transport pipes which transport crude oil or gas or the like or for submarine (underwater) cables in which power transmission lines or communication lines or the like are bundled. A number of the flat wires are arranged longitudinally on the outer peripheral surface of the transport pipe or submarine cable in the longitudinal direction of the transport pipe or submarine cable. The number of helical flat wires is wound helically upon the outer peripheral surface of the transport pipe or submarine cable so that the periphery of the transport pipe or submarine cable is covered by the number of flat wires. As mentioned above, the flat wire according to the present invention is such that its helical shape is resistant to change even with the passage of time. As a result, the helical form into which the flat wire has been shaped is maintained as it was at the time of manufacture even in a case where the flat wire is provided on the outer peripheral surface of a transport pipe or submarine cable after time has elapsed from the time of manufacture of the flat wire. The flat wire can be wound easily upon the outer peripheral surface of a transport pipe or submarine cable.

The flat wire, obtained by bundling a multiplicity of carbon fibres, is lighter in weight than steel wire of the same shape and dimensions and presents no problems in terms of corrosion with time and vulnerability to hydrogen that are specific to metal materials. A pipe or cable that uses such a flat wire as reinforcement is light in weight and excels in durability and strength. Since a light-weight pipe or cable reinforced by flat wire can be fabricated, pipe or cable elongation is achieved as well.

The flat wire aforesaid may be manufactured by delivering carbon fibres from respective ones of a plurality of delivery reels, upon which the carbon fibres have been wound, while tensioning all of the carbon fibres equally; impregnating with a thermosetting resin the carbon fibres delivered from the delivery reels; shaping and forming the thermosetting-resin-impregnated carbon fibres into a bundle by a die in such a manner that the cross section thereof becomes rectangular in shape; winding the shaped bundle of thermosetting-resin-impregnated carbon fibres upon a cylindrical grooved roll, a drum portion of which has been formed to have a helical groove, multiple times while applying heat thereto, and thereafter feeding the bundle from the grooved roll; and taking up onto a take-up reel the bundle of carbon fibres, which have been shaped into helical form, fed from the grooved roll.

Before the thermosetting resin cures, the bundle of thermosetting-resin-impregnated carbon fibres is wound multiple times upon the cylindrical grooved roll, which is formed to have the helical groove in the drum portion thereof, along the helical groove. With the thermosetting resin in a state in which it has not yet cured, it is possible for the carbon fibres to move (shift positionally) in the longitudinal direction thereof. Since the drum portion of the grooved roll is cylindrical, the carbon fibres situated on the outer surface of the bundle of carbon fibres (the surface farthest away from the grooved roll) pass through a position spaced away from the centre line of the helix (the axis of rotation of the grooved roll) more than the carbon fibres situated on the inner surface of the bundle of carbon fibres (the surface in contact with the grooved roll), so that the length of the path travelled increases. As a result, there is manufactured a flat wire that includes carbon fibres of greater length toward the outer surface and carbon fibres of smaller length toward the inner surface. All of the carbon fibres are delivered from the delivery reels at an equal tension, and the carbon fibres are delivered from delivery reels, which deliver the carbon fibres that constitute the outer surface of the bundle of carbon fibres, at a speed greater than that at which the carbon fibres are delivered from delivery reels which deliver the carbon fibres that constitute the inner surface. A flat wire with no or little strain can be obtained without producing almost any elongation or contraction in any of the carbon fibres that constitute the flat wire, and it is possible to manufacture a flat wire whose helical shape will not change or will resist change over a long period of time.

Epoxy resin, for example, may be used as the thermosetting resin.

Brief Description of the Drawings

Fig. 1 is a front view of a flexible pipe;
Fig. 2 is a front view of a flat wire;
Fig. 3 is an enlarged sectional view of the flat wire taken along line III-III of Fig. 2;
Fig. 4 is an enlarged perspective view of a portion of the flat wire;
Fig. 5 is a sectional view of an elastic body;
Fig. 6 is a plan view schematically illustrating an apparatus for manufacturing the flat wire; and
Fig. 7 is a front view of the apparatus shown in Fig. 6 for manufacturing the flat wire.

Best Mode for Carrying Out the Invention

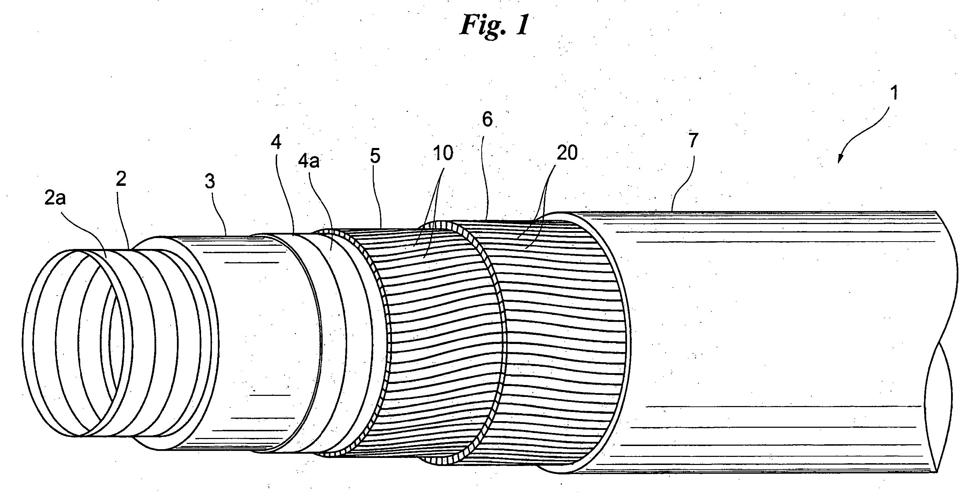

Fig. 1 is a front view of a flexible pipe 1 for transporting crude oil, gas or the like. Illustrated in Fig. 1 in exposed view are a conduit 2, an inner sheath 3, a pressure layer 4 and two tensile layers 5, 6 that constitute the flexible pipe 1.

The conduit 2 is disposed at the centre of the flexible pipe 1. The inner sheath 3, pressure layer 4, two tensile layers 5, 6 and an outer sheath 7 are provided on the outer periphery of the conduit 2 in the order mentioned.

The conduit 2 is formed by arranging a number of stainless steel, identically shaped annular members 2a in a row with their inner peripheral surfaces in agreement and with their outer peripheral surfaces in agreement. Mutually adjacent annular members 2a are adapted so as to form a cylinder and the circumferential end portions thereof are engaged with each other by a meshing mechanism (not shown). The interior of the conduit 2 is hollow and crude oil, gas or the like passes therethrough.

The outer peripheral surface of the conduit 2 is covered with a thermosetting resin such as nylon, which constitutes the inner sheath 3.

The pressure layer 4 is provided on the outer peripheral surface of the inner sheath 3. In a manner similar to that of the conduit 2, the pressure layer 4 also is constituted by a number of stainless steel, identically shaped annular members 4a. Mutually adjacent annular members 4a are adapted so as to form a cylinder and the circumferential end portions thereof are engaged with each other by a meshing mechanism (not shown).

The two tensile layers 5, 6 are provided on the outer peripheral surface of the pressure layer 4. The tensile layer 5 is constituted by a number of flat wires 10 shaped into helical form. The tensile layer 5 is constructed by arranging and winding the number of helically shaped flat wires 10 longitudinally around the pressure layer 4 in the longitudinal direction of the flexible pipe 1, thereby covering the periphery of the pressure layer 4. The tensile layer 6 also is constituted by a number of flat wires 20 shaped into helical form. The tensile layer 6 is constructed by arranging and winding the number of helically shaped flat wires 20 around the tensile layer 5, thereby covering the periphery of the tensile layer 5. The flat wires 10, 20 are wound in such a manner that the directions of the helixes oppose each other. When the flexible pipe 1 is viewed from one end toward the other, the flat wires 20 are seen to be wound on the outer peripheral surface of the tensile layer 5 in the form of a counter-clockwise helix if the flat wires 10 have been wound on the outer peripheral surface of the pressure layer 4 in the form of a clockwise helix, by way of example.

The outer peripheral surface of the tensile layer 6 is covered with a thermosetting resin such as nylon, which constitutes the outer sheath 7.

The flexible pipe 1 is used in order to transport crude oil, gas or the like from an offshore oil field to a ship, by way of example. The flexible pipe 1 exhibits flexibility, is water-tight or air-tight and has a strength that is capable of withstanding both external pressure (water pressure) and internal pressure.

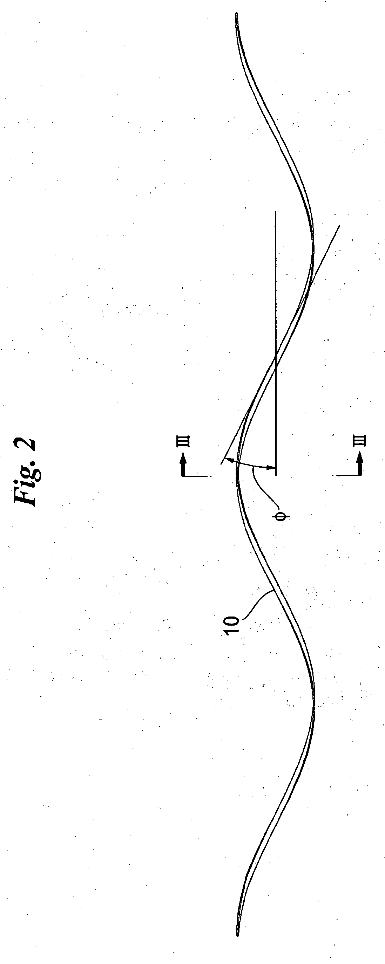

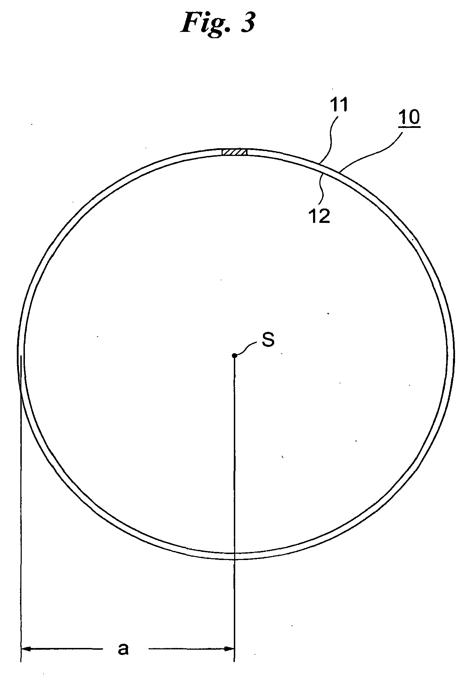

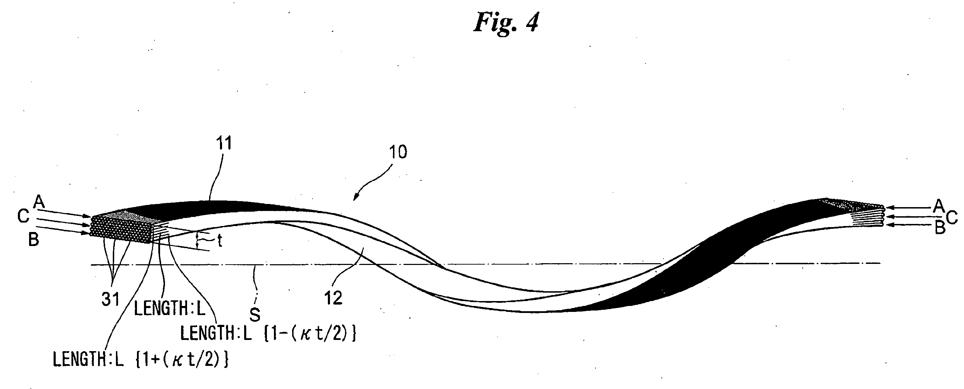

Fig. 2 is a front view of flat wire 10 at a length of two periods. Fig. 3 is an enlarged sectional view taken along line III-III of Fig. 2. Fig. 4 is a perspective view illustrating flat wire 10 at a length of one period. For the sake of clarity, the flat wire 10 shown in Fig. 4 is drawn with its width and thickness emphasized considerably.

The flat wire 10 is made of so-called Carbon Fibre Reinforced Plastic (CFRP) composed of a large number (on the order of 180,000 to 480,000) of carbon fibres 31 impregnated with a thermosetting resin (epoxy resin, for example), has a limited length and possesses a periodic shape in the form of a helix. That is, in terms of the overall configuration of the flat wire 10, its shape extends along a centre line S of a helix (the centre line is indicated by a black circle in Fig. 3 and by a one-dot chain line in Fig. 4) while twisting about the centre line. The diameter of the helix (pitch radius a) (see Fig. 3) is constant.

The flat wire 10 is flat in shape and the cross section thereof is substantially rectangular, with the two long sides and two short sides that appear in the cross section corresponding to the width and thickness of the flat wire 10, respectively. The flat wire 10 is formed so as to have a width of 6 to 20 mm and a thickness of 2 to 6 mm, by way of example, and the overall length thereof depends upon (or preferably matches) the length of the flexible pipe 1 (Fig. 1) serving as the finished product.

The flat wire 10 is such that, over the entire length thereof, one surface 11 forming the width of the flat wire 10 faces outward at all times (in the direction away from the centre line S of the helix) while a surface 12 on the opposite side faces inward at all times (in the direction toward the centre line S of the helix). Hereinafter, the surface 11 of the flat wire 10 that faces outward at all times will be referred to as outer surface 11, and the surface 12 that faces inward at all times will be referred to as inner surface 12. For the sake of clarity, the outer surface 11 of flat wire 10 is indicated in black in Fig. 4.

As mentioned above, the flat wire 10 is formed by bundling the multiplicity of carbon fibres 31, and the carbon fibres also are arranged helically along the helical form of the flat wire 10. For example, carbon fibres 31 situated on the outer surface 11 of the flat wire 10 are always situated on the outer surface 11 of the flat wire 10. Carbon fibres 31 situated on the inner surface 12 of the flat wire 10 are always situated on the inner surface 12 of the flat wire 10. That is, each of the multiplicity of carbon fibres 31 has the same position in the cross section regardless of the position of the cross section of the flat wire 10. Each of the multiplicity of carbon fibres 31 has a diameter of 7 $\mu$m, by way of example. For the sake of clarity, in Fig. 4 the multiplicity of carbon fibres 31 are drawn with their diameters emphasized considerably.

The flat wire 10 is such that the lengths of the multiplicity of carbon fibres 31 differ from position to position along the thickness direction of the flat wire.

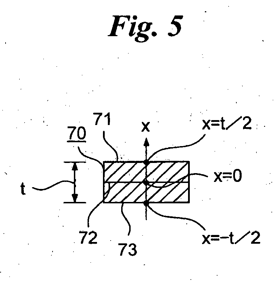

In order to express the lengths of the carbon fibres 31 quantitatively, consider an elastic body, which has a rectangular cross section, in a state in which it has been deformed into a helical shape of constant diameter in the longitudinal direction so as to have an inner surface facing inward at all times and an outer surface facing outward at all times. With reference to Fig. 5 showing the cross section of an elastic body 70, we adopt an intermediate plane 72 (at a centre position in the thickness direction) of the elastic body as the origin (x=0) and define an x axis in which the direction from an inner surface 73 toward an outer surface 71 is taken as positive, wherein the inner surface 73 is acted upon by a compressive force and the outer surface 71 by a tensile force owing to helical deformation. Further, assume that the radius of curvature of the helically deformed elastic body 70 in the intermediate plane 72 is 1/$\kappa$. If the above-mentioned compressive force and tensile force are expressed by strain $\varepsilon(x)$ produced at any position x in the thickness direction of the cross section of the elastic body 70, then the strain $\varepsilon(x)$ will be represented by the following equation:

$$\text{strain } \varepsilon(x) = \{(1/\kappa + x) - 1/\kappa\}/(1/\kappa) = \kappa x \qquad \ldots \text{ Equation 1}$$

If the thickness of the elastic body 70 is represented by t, then, by way of example, strain (hereinafter referred to as outer-surface strain $\varepsilon1$) produced on the outer surface 71 due to the above-mentioned tensile force and strain (hereinafter referred to as inner-surface strain $\varepsilon2$) produced on the inner surface 73 due to the above-mentioned compressive force will be represented by the following equations:

$$\text{outer-surface strain } \varepsilon1$$
$$= \{(1/\kappa + t/2) - 1/\kappa\}/(1/\kappa) = \kappa t/2 \qquad \ldots \text{ Equation 2}$$

$$\text{inner-surface strain } \varepsilon2$$
$$= \{(1/\kappa - t/2) - 1/\kappa\}/(1/\kappa) = -\kappa t/2 \qquad \ldots \text{ Equation 3}$$

The lengths of the multiplicity of carbon fibres 31 of the flat wire 10 differ in such a manner that the above-mentioned strain (compressive force and tensile force) will not be produced. A position-to-position difference in length along the thickness direction is produced to an extent that eliminates the above-mentioned strain. The carbon fibres 31, constituting the flat wire 10, move (shift) in position in the longitudinal direction, when the flat wire 10 is manufactured, in such a manner that this difference in length will occur. (The details regarding manufacture of the flat wire 10 will be described later.) Another way to express this is to say that each of the multiplicity of carbon fibres 31 constituting the flat wire 10 has a length identical with the path length of the helix at each position in the thickness direction of the flat wire 10, all of the multiplicity of carbon fibres 31 are free of elongation and contraction and, hence, the flat wire 10 is free of strain.

With reference to Fig. 4, taking the length (identical with the path length along the helix) of carbon fibre 31 at a centre position C along the thickness direction in flat wire 10 of a predetermined length (a length equivalent to one period) as a reference, let this length be represented by L. Further, let the radius of curvature of helical carbon fibre 31 at the centre position be represented by $1/\kappa$. In this case, based upon Equation 1, the length of carbon fibre 31 constituting the flat wire 10 at any position x (consider the x axis to be similar to that shown in Fig. 5) in the thickness direction of the flat wire 10 will be represented by the following equation:

$$\text{length of carbon fibre } 31 = L(1+\kappa x) \qquad \dots \text{ Equation 4}$$

For example, carbon fibre 31 at position A on the outer surface 11 of flat wire 10 and carbon fibre 31 at position B on the inner surface 12 will have lengths, which are represented by the following equations, based upon the above-mentioned outer-surface strain $\varepsilon 1$ (Equation 2) and inner-surface strain $\varepsilon 2$ (Equation 3):

length of carbon fibre 31 at position A on

$$\text{outer surface } 11 = L\{1+(\kappa t/2)\} \qquad \dots \text{ Equation 5}$$

length of carbon fibre 31 at position B on

$$\text{inner surface } 12 = L\{1-(\kappa t/2)\} \qquad \dots \text{ Equation 6}$$

Further, if we let $\varphi$ represent the twist angle (see Fig. 2) of flat wire 10 (this is the twist angle of carbon fibre 31 at centre position C in the thickness direction) and let a represent the pitch radius of flat wire 10 (this is the radius of the helix of carbon fibre 31 at centre position C in the thickness direction), then curvature $\kappa$ at the centre position C in the thickness direction of the flat wire 10 is calculated according to the following equation:

$$\text{curvature } \kappa = \sin^2\varphi/a \qquad \dots \text{ Equation 7}$$

As mentioned above, the multiplicity of carbon fibres 31 constituting the flat wire 10 have a difference in length, which will not give rise to strain in the flat wire 10, from one position to another along the thickness direction of the flat wire. The length of carbon fibre 31 from position to position along the thickness direction can be expressed quantitatively by Equation 4 above. If Equation 4 is expressed from the standpoint of the structure of the flat wire 10, then we can say that the multiplicity of carbon fibres 31 constituting the flat wire 10 become greater in length toward the outer surface 11 and, conversely, become smaller in length toward the inner surface 12. Since the flat wire 10 is free of strain, the helical shape of the flat wire 10 will not change even with the passage of time and the original curvature $\kappa$ (radius of curvature $1/\kappa$), twist angle $\varphi$ and pitch radius a that prevailed at the time of manufacture will be maintained from manufacture of the flat wire 10 to manufacture of the flexible pipe 1. In the process for manufacturing the flexible pipe 1, the flat wire 10 can be wound upon the outer peripheral surface of the pressure layer 4 as per the original design.

With regard also to the helical flat wire 20 that constitutes the tensile layer 6, it is composed of a multiplicity of carbon fibres 31, the multiplicity of carbon fibres 31 differ in length in such a manner that the above-mentioned strain will not be produced in the flat wire 20, the carbon fibres become greater in length toward the outer surface of the flat wire 20 and, conversely, become smaller in length toward the inner surface, in a manner similar to that of the above-mentioned flat wire 10. Since the flat wire 20 is free of strain, the helical shape of the flat wire 20 will be maintained over a long period of time.

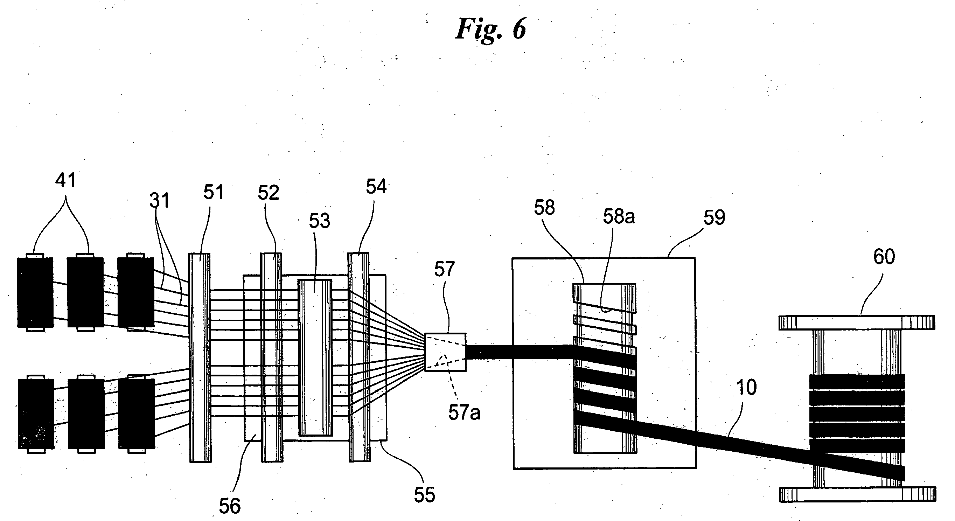

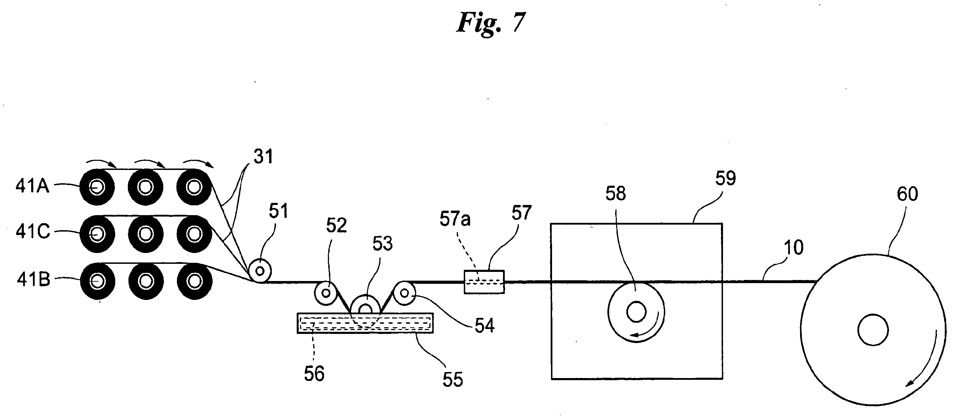

Fig. 6 is a plan view schematically illustrating an apparatus for manufacturing the helical flat wire 10 described above, and Fig. 7 is a front view of the manufacturing apparatus, which is shown in Fig. 6, as seen from the side thereof.

Carbon fibres 31 have been wound around respective ones of a plurality (15 to 40) of delivery reels 41. (Only six of the delivery reels 41 are illustrated in Fig. 6, and only nine delivery reels 41 are illustrated in Fig. 7.) Since the strands of the carbon fibres 31 are extremely slender (with a diameter of about 7 $\mu$m, as mentioned above), a group of 12,000 carbon fibres 31, for example, is provided on each delivery reel 41 in advance. A torque control device (PERMA-TORK, for example) (not shown) is mounted on the rotary shaft of each delivery reel 41 so that 120,000 carbon fibres 31 are delivered from each of the plurality of delivery reels 41 by an equal tensile force. For the sake of clarity, the delivery reels 41 that deliver the portion of the carbon fibres 31 constituting the outer surface 11 of the wire 10 (see Figs. 3 and 4), the delivery reels 41 that deliver the portion of the carbon fibres 31 constituting the centre position of the flat wire 10 in the thickness direction thereof, and the delivery reels 41 that deliver the portion of the carbon fibres 31 constituting the inner surface 12 of the flat wire 10 are indicated by reference characters 41 A, 41B and 41C, respectively, in Fig. 7 so as to distinguish them.

After passing through guide rolls 51, 52, the carbon fibres 31 that have been delivered from the plurality of delivery reels 41 at equal tension advance to a guide roll 53 and, at the location of the guide roll 53, are immersed into liquid epoxy resin 56 pooled in an epoxy resin bath 55. The carbon fibres 31 are impregnated with the epoxy resin 56 in the epoxy resin bath 55. The carbon fibres 31 impregnated with the epoxy resin 56 advance to a die 57 via a guide roll 54.

The die 57 is formed to have a passageway 57a. The passageway 57a, which has a rectangular cross section, is formed so as to taper from the entrance to the exit thereof. The carbon fibres 31 impregnated with the epoxy resin 56 are passed through the passageway 57a of the die 57 from the entrance toward the exit and here a multiplicity of the carbon fibres 31 are bundled together. The shape of the cross section of the bundled carbon fibres 31 is a shape that corresponds to the cross-sectional shape of the passageway 57a, namely a rectangle.

The carbon fibres 31 that have passed through the die 57 advance to a heating furnace 59. The heating furnace 59 is provided with a cylindrical grooved roll (forming roll) 58 the drum portion of which is formed to have a helical groove 58a. The bundle of carbon fibres 31 is wound multiple times upon the drum portion of the groove roll 58 along the helical groove 58a and is thereafter fed from the grooved roll 58.

The interior of the heating furnace 59 is heated to a high temperature so that the epoxy resin 56 impregnating the carbon fibres 31 is gradually cured within the heating furnace 59. However, it is possible for the carbon fibres 31 to move (shift positionally) in the longitudinal direction thereof without the curing of the epoxy resin 56 on the carbon fibres 31 immediately upon their entry into the heating furnace 59. The grooved roll 58 is cylindrical in shape. When the carbon fibres 31 are wound upon the grooved roll 58 in the helical groove 58a of the drum portion, therefore, the carbon fibres 31 situated on the outer surface of the bundle of carbon fibres 31 (the surface farthest away from the groove 58a of the grooved roll 58) pass through a position spaced away from the centre line of the helix (the axis of rotation of the grooved roll) more than the carbon fibres 31 situated on the inner surface of the bundle of carbon fibres 31 (the surface in contact with the groove 58a of the grooved roll 58). As a result, when the carbon fibres 31 are wound upon the grooved roll 58, the carbon fibres 31 situated on the outer surface of the bundle of carbon fibres 31 incorporate carbon fibres 31 of greater length in comparison with the carbon fibres 31 situated on the inner surface. The carbon fibres 31 gradually increase in length from the inner surface toward the outer surface.

Since all of the carbon fibres 31 are delivered from the delivery reels 41 under equal tension, as mentioned above, multiple carbon fibres 31 constituting the bundle of carbon fibres 31 develop no difference in length ascribable to stretching of the fibres. In actuality, the multiple carbon fibres 31 develop almost no elongation and contraction. The difference in length of the carbon fibres 31 is produced by winding them upon the cylindrical grooved roll 58 as described above. With reference to Fig. 7, the carbon fibres 31 are delivered from the delivery reels 41 A, which deliver the carbon fibres 31 that constitute the outer surface of the bundle of carbon fibres 31, at a speed greater than that at which the carbon fibres 31 are delivered from the delivery reels 41B, which deliver the carbon fibres 31 that constitute the inner surface. The carbon fibres 31 are delivered from the delivery reels 41 C, which deliver the carbon fibres 31 situated at the centre of the bundle of carbon fibres 31 in the thickness direction, at a speed intermediate the delivery speeds of the delivery reels 41A and 41B. As a result, a difference in the length of the carbon fibres 31 from one position to another in the thickness direction is produced and is not due to elongation or contraction of the carbon fibres 31.

The epoxy resin 56 gradually cures in the heating furnace 59, as mentioned above. The bundle of carbon fibres 31 is shaped into helical form by winding it multiple times in the helical groove 58a on grooved roll 58. When the bundle of carbon fibres 31 is fed from the grooved roll 58 and exits to the exterior of the heating furnace 59, the epoxy resin 56 is almost completely cured and the result is the flat wire 10 that has been shaped into helical form (see Figs. 2, 3 and 4). The radius of curvature $1/\kappa$, twist angle $\varphi$ and pitch radius a of the helical shape into which the flat wire 10 is formed are determined in accordance with the diameter of the grooved roll 58 and the angle of the helical groove 58a formed in the grooved roll 58, and the thickness t of the flat wire 10 is determined in accordance with the number of carbon fibres 31 (number of delivery reels 41). The diameter of the grooved roll 58, the angle of the helical groove 58a formed in the grooved roll 58 and the number of carbon fibres 31, etc., are determined appropriately in accordance with the diameter, etc., of the flexible pipe 1 serving as the finished product.

The flat wire 10 shaped into helical form is taken up on a take-up reel 60 while the helical form into which it has been shaped is maintained intact. For example, flat wire 10 having a length of 3,000 m is taken up on the take-up reel 60. The take-up reel 60 onto which the flat wire 10 has been taken up is subsequently transported to a manufacturing plant or the like for the flexible pipe 1, the flat wire 10 is cut to the desired length as necessary and the flexible pipe 1 (see Fig. 1) is manufactured.

The flat wire 20 also is fabricated through a manufacturing process similar to the process for manufacturing the above-mentioned flat wire 10.

The flat wires 10, 20 have a weight which is less than (on the order of 1/5) the weight of steel wire of the same shape and dimensions and exhibit no problems in terms of corrosion with time and vulnerability to hydrogen that are specific to metal materials. Further, the flat wires exhibit a high strength of 2,000 Mpa or greater. The flexible pipe 1 that uses such flat wires 10, 20 is light in weight and excels in durability and strength. Since reducing the weight of the flexible pipe 1 equipped with the flat wires 10, 20 is achieved as well, lengthening of the flexible pipe 1 is realized.

In being taken up by the take-up reel 60, the flat wires 10, 20, which have been shaped into helical form, undergo elastic deformation. In order to suppress the occurrence of internal cracks and a creep phenomenon (helical reformation due to long-term stress load) in the flat wires 10, 20, the take-up reel 60 used is one having a diameter (drum diameter) capable of keeping strain, which is produced in the overall flat wires 10, 20, below 0.005 (0.5%).

## Claims

1.    A flat wire (10; 20) comprising:

a multiplicity of carbon fibres (31) impregnated with a thermosetting resin (56), said flat wire (10; 20) having a cross section of rectangular shape and being shaped into a helical form of constant diameter in the longitudinal direction so as to have an inner surface (12) facing inward at all times and an outer surface (11) facing outward at all times;

said carbon fibres (31) being of gradually increasing length from said inner surface (12) toward said outer surface (11).

2.    A flat wire (10; 20) according to claim 1, wherein a carbon fibre (31) at each position along a direction connecting said inner surface (12) and said outer surface (11) has a length identical with a path length of a helix at said each position.

3.    A flat wire (10; 20) according to claim 1 or 2, composed of carbon fibres (31) which undergo neither elongation nor contraction.

4.    A reinforced pipe or reinforced cable (1) in which a number of flat wires (10, 20) set forth in any one of claims 1 to 3 have been wound helically on an outer peripheral surface of a pipe or cable (2).

## Patentansprüche

1.    Flacher Draht (10; 20), umfassend:

eine Mehrzahl von Kohlenstofffasern (31), die mit einem wärmehärtenden Harz (56) imprägniert sind, wobei der flache Draht (10; 20) einen Querschnitt von rechteckiger Form aufweist und in eine helische Form mit konstantem Durchmesser in der Längsrichtung geformt ist, sodass er eine immer nach innen weisende innere Oberfläche (12) und eine immer nach außen weisende äußere Oberfläche (11) aufweist;

wobei die Kohlenstofffasern (31) von graduell ansteigender Länge von der inneren Oberfläche (12) aus zur äußeren Oberfläche (11) hin sind.

2.    Flacher Draht (10; 20) nach Anspruch 1, wobei eine Kohlenstofffaser (31) an jeder Position entlang einer die innere Oberfläche (12) und die äußere Oberfläche (11) verbindenden Richtung eine mit einer Pfadlänge einer Helix an jeder Position identische Länge aufweist.

3.    Flacher Draht (10; 20) nach Anspruch 1 oder 2, gebildet aus Kohlenstofffasern (31), die weder Ausdehnung noch Kontraktion erfahren.

4.    Verstärktes Rohr oder verstärktes Kabel (1), in dem eine Anzahl flacher Drähte (10, 20) nach einem der Ansprüche 1 bis 3 auf einer äußeren Randoberfläche eines Rohrs oder Kabels (2) helisch gewickelt worden sind.

## Revendications

1.    Fil plat (10; 20) qui comprend :

une multiplicité de fibres de carbone (31) imprégnées avec une résine thermodurcissable (56), ledit fil plat (10 ; 20) ayant une section transversale de forme rectangulaire et ayant une forme hélicoïdale à diamètre constant dans la direction longitudinale de façon à avoir une surface intérieure (12) tournée vers l'intérieur en permanence, et une surface extérieure (11) tournée vers l'extérieur en permanence ;
lesdites fibres de carbone (31) ayant une longueur qui augmente progressivement entre ladite surface intérieure (12) et ladite surface extérieure (11).

2. Fil plat (10 ; 20) selon la revendication 1, dans lequel une fibre de carbone (31) au niveau de chaque emplacement le long d'une direction qui relie ladite surface intérieure (12) et ladite surface extérieure (11) possède une longueur identique à une longueur de trajet d'une hélice à chacun desdits emplacements.

3. Fil plat (10 ; 20) selon la revendication 1 ou 2, composé de fibres de carbone (31) qui ne subissent ni allongement, ni contraction.

4. Tube renforcé ou câble renforcé (1) dans lequel plusieurs fils plats (10, 20) selon l'une quelconque des revendications 1 à 3 ont été enroulés en hélice sur une surface périphérique extérieure d'un tube ou d'un câble (2).

*Fig. 1*

*Fig. 2*

## Fig. 3

*Fig. 4*

EP 2 796 274 B1

A

C

B

11

10

31

LENGTH:L

LENGTH:L {1-($\kappa$t/2)}

LENGTH:L {1+($\kappa$t/2)}

t

S

12

A

C

B

## Fig. 5

Fig. 6

Fig. 7

EP 2 796 274 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009087348 A
- DE 2028785 A1
- EP 0381590 A1